# EUROPEAN PATENT SPECIFICATION

(11) **EP 3 622 186 B1**
(45) Date of publication and mention of the grant of the patent: **10.08.2022**
(21) Application number: 18723655.9
(22) Date of filing: 03.05.2018
(51) Int. Cl.: F16B 21/07, B60T 17/04, F16L 55/035, F16B 37/08

(54) **RETAINING SYSTEM FOR VEHICLE COMPONENTS AND ASSOCIATED RETAINING DEVICE**
HALTESYSTEM FÜR FAHRZEUGKOMPONENTEN UND ZUGEHÖRIGE HALTEVORRICHTUNG
SYSTÈME DE RETENUE POUR PIÈCES DE VÉHICULE ET DISPOSITIF DE RETENUE ASSOCIÉ

(30) Priority: 09.05.2017 IT 201700050197
(43) Date of publication of application: 18.03.2020
(73) Proprietor: Illinois Tool Works Inc., Glenview, IL 60025 (US)
(72) Inventor: YON, Fulvio, Pacifico, Glenview, IL 60025 (US); COCCOZ, Andrea, Giovanni Giuseppe, Glenview, IL 60025 (US)
(74) Representative: HGF
(86) International application number: PCT/US2018/030757
(87) International publication number: WO 2018/208566

(56) References cited:
- EP-A1- 2 891 838
- EP-A1- 3 002 495
- EP-A2- 2 131 084
- US-A1- 2013 146 720

## Description

### TECHNICAL FIELD

The present invention relates to a retaining system suitable for attaching functional components of a vehicle, such as for example piping for the transport of fluids (brake fluid, water, fuel, coolants) or for the passage of electrical cables, to the bodywork of vehicles (generally the underbody). The invention also relates to an associated retaining device.

### BACKGROUND

It is known that in the field of motor vehicles many functional components and in particular pipes for the transport of fluids or conduits for the passage of electrical cables have to be attached to the underbody (or other parts of the bodywork). These functional vehicle components are attached to threaded studs firmly secured in the bodywork by retaining devices comprising two parts: a first part is used to attach the functional component to the retaining device and may take various forms; in general it comprises a pincer clamp which secures the functional component (for example a pipe) by means of a snap fit; a second part is instead used to attach the retaining device to the vehicle's bodywork. In this way, for example when pipes are secured, a plurality of identical retaining devices may be pre-fitted to the functional component which has to be attached, spaced out along the pipe, and then attached to predetermined attachment points located on the bodywork one by one. These points of attachment conveniently comprise threaded studs projecting from the bodywork to which they are integrally attached, for example by welding or insertion.

So that the functional component can be fitted quickly, known retaining devices each include a portion or section for attachment to the bodywork designed to make a snap fit with a corresponding threaded stud; this attachment portion is generally provided with a hole provided internally with projecting resiliently deformable fins that are inclined with respect to an axis of symmetry of the hole from a side opposite to the direction in which the hole is inserted onto the threaded stud; in this way the fins, which are designed to interfere with the outer threaded surface of the stud, fold out radially when the attachment portion is inserted onto the threaded stud, enabling the threaded stud to be housed in the hole, but then preventing the stud from being extracted from the hole because, through the effect of the interference with the ridges of the thread, they fold radially towards the axis of the hole, gripping the stud, when an attempt is made to extract the stud from the hole.

The attachment portion described, with its internally finned hole and each respectively threaded stud constitute a known and effective retaining system, but one which is not however without disadvantages.

In particular, the retaining fins can bend during use, for example as a result of vibration of the vehicle when in motion, causing the hole to be no longer located axially, but offset and/or inclined with respect to the threaded stud; when in use this causes small relative movements between the threaded stud and the attachment portion of the retaining device, which may be the cause of undesired detachment or noise. In order to limit these movements, portions of the hole which are without fins are generally made in such a way as to mate with the threaded stud with very little play; this, however, results in transmission of the vibrations affecting the functional components during use, for example pipes, towards the interior of the vehicle's passenger space, these being the cause of even more marked noise, which can even reach significant levels. These disadvantages have not been resolved by EP2131084, which provides for further fins made of elastomer material circumferentially located between the retaining fins of plastics material that engage almost the entire length of the threaded stud through interference, but only over short circumferential lengths of the same, as a result of which the threaded stud may be located non-axially with respect to the threaded hole. US2013146720 also does not overcome the disadvantages described in that the threaded stud may in any event be located non-axially.

### SUMMARY

One object of the present invention is therefore to overcome the disadvantages of the state of the art by providing a retaining system and an associated retaining device of simple and reliable construction, taking up little space and costing relatively little, through which functional vehicle components, in particular pipes, can be attached to the bodywork of a vehicle prepared for the purpose, quickly, and with relatively small coupling force, but with great retention ability, and which at the same time are substantially free of noise. One object of the invention is also that of continuing to use the threaded studs currently in use for attachment to the vehicle's bodywork.

The present invention therefore relates to a retaining system and an associated retaining device as defined in the appended claims.

### BRIEF DESCRIPTION OF THE DRAWINGS

Further features and advantages of the present invention will be apparent from the following description of a possible embodiment, provided purely by way of a non-limiting example with reference to the appended drawings, in which:
Figure 1 diagrammatically illustrates a perspective view of the front three quarters of a retaining device constructed according to the invention with parts partly removed for simplicity;
Figure 2 shows a front view in elevation and partial cross-section of the retaining device in Figure 1 on a magnified scale; and
Figure 3 shows a view in elevation and cross-section along a plane of the line III-III of a detail of the retaining device in Figure 2 in a configuration of use to form the retaining system according to the invention with a threaded stud, on a further magnified scale.

### DETAILED DESCRIPTION

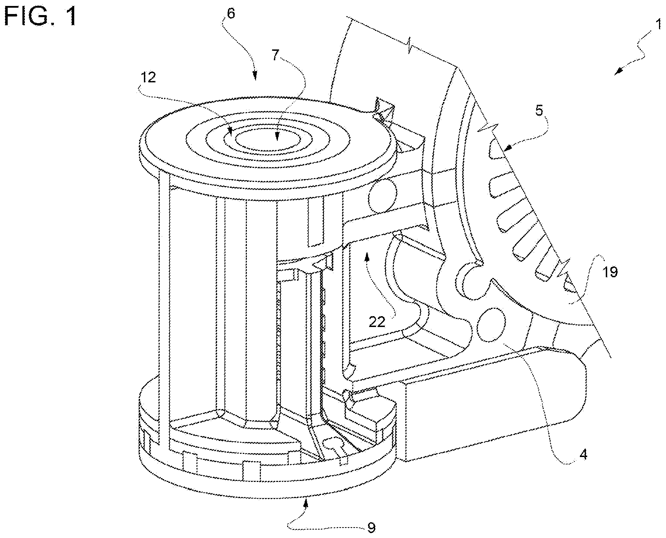

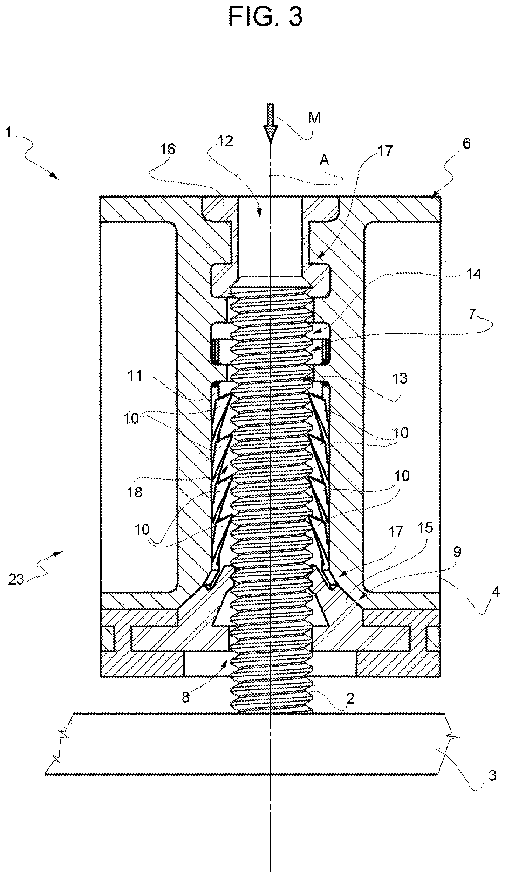

With reference to Figures 1 to 3, 1 indicates as a whole a retaining device for attaching a functional component of a vehicle, for example a pipe, known and not illustrated for simplicity, to a threaded stud 2 (Figure 3) integrally fixed in a known way, for example by insertion or welding, to an element of the bodywork 3 of a vehicle, illustrated only partly and diagrammatically for simplicity.

Retaining device 1 comprises a body 4 divided into a first portion or section 5 designed/configured to be integrally attached to the functional component to be connected, and a second portion or section 6 designed/configured to engage in use the threaded stud 2 by snap fit, the two portions or sections 5, 6 of body 4 being of one piece with each other and both being made of synthetic plastics materials.

First section or portion 5 is in itself known and is only partly illustrated for simplicity; in the non-limiting example illustrated this comprises a ring-shaped clamp and will be described below. It is however clear that first section or portion 5 may have any shape, depending on the functional element which has to be attached to bodywork 3.

The second portion or section 6 comprises at least one hole 7 designed/configured to receive in use the threaded stud 2 via an inlet opening 8 of the hole defined by an open first end 9 thereof; portion or section 6 also comprises a plurality of resiliently deformable fins 10 made of synthetic plastics material which project out radially inside the hole 7, starting from a radially inner lateral wall 11 of the hole 7. Fins 10 are oriented obliquely to an axis A of symmetry of the hole 7 (Figure 3), so as to converge towards the axis of symmetry A towards a second end 12 of the hole 7 opposite to the first end 9. According to one characteristic of the invention a plurality (therefore two or more) fins 10 are arranged axially in series or "in tandem", that is in an axial sequence in the hole 7 so as to occupy the entire length thereof apart from a limited axial length thereof, as will be seen.

Resiliently deformable fins 10 therefore face axis A from a side opposite to a direction of insertion M of hole 7 onto stud 2 indicated by the arrow in Figure 3 and are designed/configured, in use, to engage by an interference fit with an outer lateral wall 13 of the threaded stud 2, and in particular the ridges of at least one thread 14 made on the lateral wall 13.

According to another aspect of the invention, the second portion or section 6 of the body 4 also comprises at least one first annular element 15 and one second annular element 16, both made of an elastomer material; element 16 is firmly housed within a length 17 that is without fins 10 of second end 12 of hole 7, while element 15 is firmly attached to an end 25 of portion or section 6 opposite end 12 of hole 7 corresponding to inlet opening 8 of hole 7, for example, as illustrated non-limitingly in Figure 3, it is co-molded partly within and partly outside end 25.

Furthermore, elastomer elements 15 and 16 are arranged in an axially offset way with respect to the fins 10, that is "in tandem" or axial sequence, respectively upstream and downstream of the fins 10 with respect to insertion direction M.

At least annular element 16 of elastomer material is finally designed/configured, in use, to engage the threaded stud 2 by an interference fit, in particular to interfere with at least the ridges of thread 14 over the entire axial length of length 17 and circumferentially all around threaded stud 2.

According to a further aspect of the invention, at least annular elastomer element 16 projects out radially from the lateral wall 11 of the hole 7 towards the axis of symmetry A to an extent equal to or greater than the extent to which resiliently deformable fins 10 project out radially from the lateral wall 11 of the hole 7.

In addition to this, annular elastomer element 16 extends axially within the second end 12 of the hole 7 by an amount less than the axial extension of an intermediate length 18 of the lateral wall 11 of the hole 7 provided with resiliently deformable fins 10 over its entire axial length. In the example illustrated, elastomer element 15 instead extends axially immediately outside hole 7 and around it, corresponding to end 9 and over the full width transverse to axis A of end 25, acting as a front supporting element. It is, however, clear that element 15 can also be configured in a similar way to element 16 so as to interfere with threaded stud 2 when in use.

In this way, the insertion force needed to insert and secure portion or section 6 of body 4 of retaining device 1 onto stud 2 by means of hole 7 and fins 10 is not appreciably increased by the presence of elastomer elements 15, 16; at the same time, however, elastomer elements 15, 16 prevent any lateral or angular displacement of hole 7 with respect to threaded stud 2, preventing fins 10 from losing their grip on thread 14, and also on the other hand, being made of an elastomer material, damp out any vibration which may be experienced by them when in use, effectively preventing (or at least greatly attenuating) the generation of noise, either through the effect of vibration originating from stud 2, or through the effect of vibration originating from the functional elements which have to be attached, which is transmitted to portion or section 5.

The first section or portion 5 and the second portion or section 6 of the body 4 are formed of one piece from the same synthetic plastics material and resiliently deformable fins 10 are formed of one piece with the second portion or section 6.

First annular elastomer element 15 and second annular elastomer element 16 are preferably co-molded with the second portion or section 6 of the body 4 so as to be integral therewith.

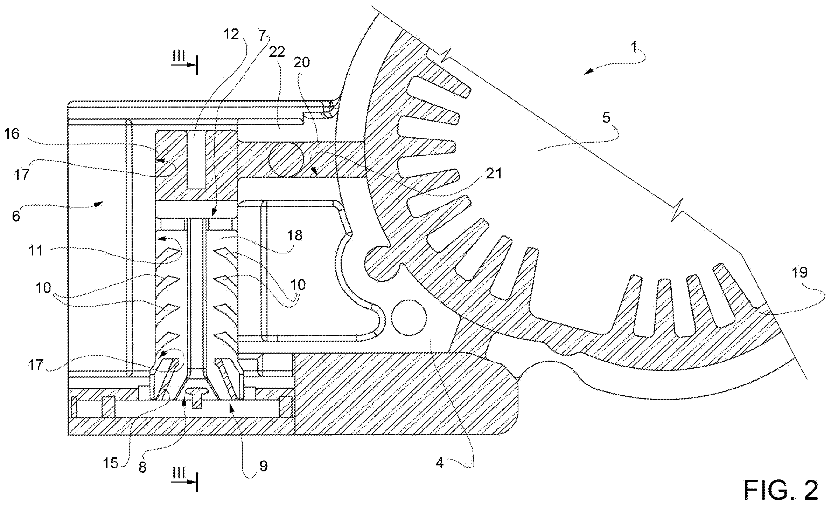

Furthermore, according to the preferred embodiment illustrated, the first portion or section 5 is shaped as a pincer clamp, radially open and able to snap shut, lined inside with a third annular element 19 made of an elastomer material radially cut. The third annular elastomer element 19 is formed integrally of one piece with annular elastomer elements 15, 16 through respective connecting stays 20 extending within the corresponding channels 21 (Figure 2) made within an attachment portion 22 of body 4 between first and second portion or section 5, 6 of that body 4 and/or around portion or section 5 itself.

According to one possible variant, which for simplicity is not illustrated, the first and second annular elastomer elements 15, 16 are instead merely integrally fitted or integrally coupled, for example by snap fit, at the first and second end 9, 12 of the hole 4 so that they are under all circumstances firmly attached to second portion or section 6 of body 4.

According to one important aspect of the invention, the first and second annular elastomer elements 15, 16 are made of a softer material than the synthetic plastics material of which resiliently deformable fins 10 are made so that the insertion force required to insert portion or section 6 onto threaded stud 2 is specifically kept low.

On the basis of what has been described, threaded stud 2 and retaining device 1 together form a retaining system 23 (Figure 3) for fixing a functional vehicle component, for example a pipe, which is known and not illustrated for simplicity, to a vehicle bodywork 3; threaded stud 2 is integrally fixed to the bodywork 3 and extends out axially from the bodywork 3. Retaining system 23 conveniently comprises a plurality of threaded studs 2 and retaining devices 1 which are the same as each other, mounted at a distance from each other along the longitudinal length of the functional element which has to be attached.

Resiliently deformable fins 10 are configured so as to act together to form a snap fit, with a ratchet mechanism, which is otherwise known, with respective ridges of at least one thread 14 provided on the lateral wall 13 of the threaded stud 2; while at least annular elastomer element 16 acts together to form an interference fit with the threaded stud 2, so as to be resiliently compressed radially by the thread 14 on the lateral wall 13 of the threaded stud 2 so as to prevent relative movements between hole 7 and threaded stud 2 which would be possible because of the resilient nature of fins 10 and which are instead prevented by element 16, also in combination with the presence of a stable supporting surface having high friction offered by elastomer element 15.

All the objects of the invention are therefore accomplished.

## Claims

1. A retaining device (1) for connecting a functional component of a vehicle to a threaded stud (2) integrally fixed to a vehicle bodywork (3), comprising a body (4) divided into a first portion or section (5) designed to be integrally attached to the functional component to be connected, and a second portion or section (6) designed to engage in use the threaded stud (2) by snap fit, the first and the second portion or section (5,6) of the body being integral with each other; the second portion or section (6) comprising at least one hole (7) designed to receive in use the threaded stud (2) via an inlet opening (8) of the hole defined by an open first end (9) thereof, and a plurality of resiliently deformable fins (10) which project out radially inside the hole (7), starting from a lateral wall (11) of the hole, and which are oriented obliquely to an axis (A) of symmetry of the hole so as to converge towards the axis of symmetry towards a second end (12) of the hole opposite to the first end of the hole; said resiliently deformable fins (10) being designed, in use, to engage by an interference fit a lateral wall (13) of the threaded stud; **characterized in that in combination:**
i) said resiliently deformable fins (10) are arranged axially in series or "in tandem", that is in an axial sequence in said hole (7) so as to occupy the entire length thereof apart from at least one axial length (17) thereof which is without fins (10);
ii) the second portion or section (6) of the body also comprises at least a first and a second element (15,16) made of an elastomer material which are firmly mounted on the second portion or section (6) at the first and second ends (9,12) of the hole (7), arranged in an axially offset way with respect to said resiliently deformable fins (10), "in tandem" or axial sequence with respect thereto, respectively upstream and downstream of said fins (10) with respect to a direction (M) in which said hole (7) is inserted onto the threaded stud (2);
iii) at least the second element (16) made of elastomer material being housed within said length (17) of the hole (7) that is without fins (10) located at the second end (12) of the hole (7);
iv) at least the second element (16) of elastomer material
being designed, in use, to engage the threaded stud (2) by an interference fit.

2. The retaining device as claimed in claim 1, **characterized in that** at least the second elastomer element (16) projects out radially from the lateral wall (11) of the hole (7) and towards the axis of symmetry (A) to an extent equal to or greater than the extent to which said resiliently deformable fins (10) project out radially from the lateral wall (11) of the hole (7).

3. The retaining device as claimed in claim 1 or 2, **characterized in that** at least the second elastomer element (16) extends axially within said second end (9,12) of the hole by an amount less than the axial extension of an intermediate length (18) of the lateral wall (11) of the hole (7) provided with said resiliently deformable fins (10) over an entire axial length thereof.

4. The retaining device as claimed in one of the preceding claims, **characterized in that** the first and the second portion or section (5,6) of the body are formed of one piece from the same synthetic plastics material, said resiliently deformable fins (10) being formed of one piece with the second portion or section (6).

5. The retaining device as claimed in one of the preceding claims, **characterized in that** the first and the second elastomer element (15,16) are co-molded with said second portion or section (6) of the body, so as to be integral therewith.

6. The retaining device as claimed in claim 5, **characterized in that** the first portion or section (5) is shaped as a pincer clamp, radially open and able to snap shut, lined inside with a third element (19) made of an elastomer material, of annular shape and radially cut; the third annular elastomer element (19) being formed integrally of one piece with the first and the second elastomer element (15,16) through respective connecting stays (20).

7. The retaining device as claimed in one of claims 1 to 4, **characterized in that** the first and the second elastomer element (15,16) are integrally fitted or integrally coupled, for example by snap fit, to the second portion or section (6) of the body at the first and the second end (9,12) of the hole.

8. The retaining device as claimed in one of the preceding claims, **characterized in that** the first and the second elastomer element (15,16) are made of a softer material than a synthetic plastics material of which said resiliently deformable fins (10) are made.

9. A retaining system (23) for fixing a functional vehicle component to a vehicle bodywork (3), **characterized in that** it comprises at least one threaded stud (2) integrally fixed to the bodywork and that it extends out axially from the bodywork, and at least one retaining device (1) as claimed in one of the preceding claims; wherein said resiliently deformable fins (10) act together to form a snap fit, with a ratchet mechanism, with respective ridges of a thread (14) on the lateral wall (13) of the threaded stud (2); while at least one of said first and second elastomer element (15, 16) acts together to form an interference fit with the threaded stud (2), so as to be resiliently compressed radially by the thread (14) on the lateral wall (13) of the threaded stud (2).

10. The retaining system (23) as claimed in claim 9, **characterized in that** the first and the second elastomer element (15,16) are made of a softer material than a synthetic plastics material of which said resiliently deformable fins (10) are made.

## Patentansprüche

1. Haltevorrichtung (1) zum Verbinden einer funktionellen Komponente eines Fahrzeugs mit einem einstückig an einer Fahrzeugkarosserie (3) befestigten Gewindebolzen (2), aufweisend einen Körper (4), der in einen ersten Abschnitt oder Bereich (5), der gestaltet ist, einstückig an der zu verbindenden funktionellen Komponente angebracht zu werden, und einen zweiten Abschnitt oder Bereich (6), der gestaltet ist, im Gebrauch mit dem Gewindebolzen (2) durch Einrasten in Eingriff zu kommen, unterteilt ist, wobei der erste und der zweite Abschnitt oder Bereich (5, 6) des Körpers einstückig miteinander sind; wobei der zweite Abschnitt oder Bereich (6) zumindest eine Öffnung (7) aufweist, die so gestaltet ist, dass sie im Gebrauch den Gewindebolzen (2) über eine Einlassöffnung (8) der Öffnung, die durch ein offenes erstes Ende (9) davon definiert ist, aufnimmt, und eine Vielzahl von elastisch verformbaren Rippen (10), die in der Öffnung (7), ausgehend von einer seitlichen Wand (11) der Öffnung, radial nach außen ragen und die schräg zu einer Symmetrieachse (A) der Öffnung ausgerichtet sind, sodass sie zu einem zweiten Ende (12) der Öffnung, das dem ersten Ende der Öffnung gegenüberliegt, in Richtung der Symmetrieachse konvergieren; wobei die elastisch verformbaren Rippen (10) so gestaltet sind, dass sie im Gebrauch durch eine Presspassung mit einer seitlichen Wand (13) des Gewindebolzens in Eingriff kommen; **dadurch gekennzeichnet, dass in Kombination:**
i) die elastisch verformbaren Rippen (10) axial in Reihe oder "in Tandem" angeordnet sind, d. h. in einer axialen Reihenfolge in der Öffnung (7), sodass sie deren gesamte Länge, mit Ausnahme zumindest einer axialen Länge (17) davon, die ohne Rippen (10) ist, einnehmen;
ii) der zweite Abschnitt oder Bereich (6) des Körpers zumindest ebenfalls ein erstes und ein zweites Element (15, 16) aus einem elastomeren Material aufweist, die fest an dem zweiten Abschnitt oder Bereich (6) an dem ersten und zweiten Ende (9, 12) der Öffnung (7) montiert sind, in Bezug auf die elastisch verformbaren Rippen (10), "in Tandem" oder in axialer Reihenfolge dazu, in einer axial versetzten Art und Weise angeordnet sind, jeweils stromaufwärts und stromabwärts der Rippen (10) in Bezug auf eine Richtung (M), in der die Öffnung (7) auf den Gewindebolzen (2) eingeführt wird;
iii) zumindest das zweite Element (16) aus elastomerem Material innerhalb der Länge (17) der Öffnung (7), die ohne Rippen (10), die sich an dem zweiten Ende (12) der Öffnung (7) befinden, ist, untergebracht ist;
iv) zumindest das zweite Element (16) aus elastomerem Material so gestaltet ist, dass es im Gebrauch mit dem Gewindebolzen (2) durch eine Presspassung in Eingriff kommt.

2. Haltevorrichtung nach Anspruch 1, **dadurch gekennzeichnet, dass** zumindest das zweite Elastomerelement (16) radial aus der Seitenwand (11) der Öffnung (7) und in Richtung der Symmetrieachse (A) in einem Ausmaß herausragt, das gleich oder größer ist als das Ausmaß, in dem die elastisch verformbaren Rippen (10) radial aus der Seitenwand (11) der Öffnung (7) herausragen.

3. Haltevorrichtung nach Anspruch 1 oder 2, **dadurch gekennzeichnet, dass** sich zumindest das zweite Elastomerelement (16) axial innerhalb des zweiten Endes (9, 12) der Öffnung um einen Betrag erstreckt, der geringer ist als die axiale Ausdehnung einer Zwischenlänge (18) der seitlichen Wand (11) der Öffnung (7), die mit den elastisch verformbaren Rippen (10) über eine gesamte axiale Länge derselben vorgesehen ist.

4. Haltevorrichtung nach einem der vorhergehenden Ansprüche, **dadurch gekennzeichnet, dass** der erste und der zweite Abschnitt oder Bereich (5, 6) des Körpers aus einem Stück aus demselben synthetischen Kunststoffmaterial ausgebildet sind, wobei die elastisch verformbaren Rippen (10) aus einem Stück mit dem zweiten Abschnitt oder Bereich (6) ausgebildet sind.

5. Haltevorrichtung nach einem der vorhergehenden Ansprüche, **dadurch gekennzeichnet, dass** das erste und das zweite Elastomerelement (15, 16) gemeinsam mit dem zweiten Abschnitt oder Bereich (6) des Körpers geformt sind, sodass sie einstückig mit diesem sind.

6. Haltevorrichtung nach Anspruch 5, **dadurch gekennzeichnet, dass** der erste Abschnitt oder Bereich (5) als Zangenklemme geformt ist, die radial offen ist und zuklappen kann, und innen mit einem dritten Element (19) aus einem elastomeren Material ausgekleidet ist, das ringförmig und radial geschnitten ist; wobei das dritte ringförmige Elastomerelement (19) einstückig aus einem Stück mit dem ersten und dem zweiten Elastomerelement (15, 16) durch entsprechende Verbindungsstege (20) ausgebildet ist.

7. Haltevorrichtung nach einem der Ansprüche 1 bis 4, **dadurch gekennzeichnet, dass** das erste und das zweite Elastomerelement (15, 16) einstückig oder einteilig, beispielsweise durch Schnappsitz, mit dem zweiten Abschnitt oder Bereich (6) des Körpers an dem ersten und dem zweiten Ende (9, 12) der Öffnung gekoppelt sind.

8. Haltevorrichtung nach einem der vorhergehenden Ansprüche, **dadurch gekennzeichnet, dass** das erste und das zweite Elastomerelement (15, 16) aus einem weicheren Material hergestellt ist als ein synthetisches Kunststoffmaterial, aus dem die elastisch verformbaren Rippen (10) hergestellt sind.

9. Haltesystem (23) zum Befestigen einer funktionellen Fahrzeugkomponente an einer Fahrzeugkarosserie (3), **dadurch gekennzeichnet, dass** es zumindest einen Gewindebolzen (2) aufweist, der einstückig an der Karosserie befestigt ist und sich axial von der Karosserie aus erstreckt, und zumindest eine Haltevorrichtung (1) nach einem der vorhergehenden Ansprüche; wobei die elastisch verformbaren Rippen (10) zusammenwirken, um mit entsprechenden Rippen eines Gewindes (14) an der seitlichen Wand (13) des Gewindebolzens (2) einen Schnappsitz mit einem Ratschenmechanismus auszubilden; während zumindest eines der ersten und zweiten Elastomerelemente (15, 16) zusammenwirkt, um eine Presspassung mit dem Gewindebolzen (2) auszubilden, sodass es durch das Gewinde (14) an der seitlichen Wand (13) des Gewindebolzens (2) radial elastisch komprimiert wird.

10. Haltesystem (23) nach Anspruch 9, **dadurch gekennzeichnet, dass** das erste und das zweite Elastomerelement (15, 16) aus einem weicheren Material hergestellt sind als ein synthetisches Kunststoffmaterial, aus dem die elastisch verformbaren Rippen (10) hergestellt sind.

## Revendications

1. Dispositif de retenue (1) pour la connexion d'une pièce fonctionnelle d'un véhicule à un goujon fileté (2) fixé intégralement à une carrosserie de véhicule (3), comprenant un corps (4) divisé en une première partie ou section (5) conçue pour être intégralement attachée à la pièce fonctionnelle à connecter, et une deuxième partie ou section (6) conçue pour s'engager en utilisation avec le goujon fileté (2) par encliquetage, la première et la deuxième partie ou section (5, 6) du corps étant solidaires l'une avec l'autre ; la deuxième partie ou section (6) comprenant au moins un trou (7) conçu pour recevoir en utilisation le goujon fileté (2) via une ouverture d'entrée (8) du trou définie par une première extrémité ouverte (9) de celui-ci, et une pluralité d'ailettes déformables élastiquement (10) qui font saillie radialement à l'intérieur du trou (7), en partant d'une paroi latérale (11) du trou, et qui sont orientées obliquement par rapport à un axe (A) de symétrie du trou de manière à converger vers l'axe de symétrie vers une deuxième extrémité (12) du trou opposée à la première extrémité du trou ; lesdites ailettes élastiquement déformables (10) étant conçues, en utilisation, pour s'engager par ajustement serré avec une paroi latérale (13) du goujon fileté ; **caractérisé en ce que en combinaison :**
i) lesdites ailettes élastiquement déformables (10) sont agencées axialement en série ou « en tandem », c'est-à-dire dans une séquence axiale dans ledit trou (7) de manière à occuper toute la longueur de celui-ci à l'exception d'au moins une longueur axiale (17) de celui-ci qui est sans ailettes (10) ;
ii) la deuxième partie ou section (6) du corps comprend également au moins un premier et un deuxième éléments (15, 16) faits d'un matériau élastomère qui sont montés fermement sur la deuxième partie ou section (6) sur les première et deuxième extrémités (9, 12) du trou (7), agencés d'une manière décalée axialement par rapport auxdites ailettes déformables élastiquement (10), « en tandem » ou en séquence axiale par rapport à celles-ci, respectivement en amont et en aval desdites ailettes (10) par rapport à une direction (M) dans laquelle ledit trou (7) est inséré sur le goujon fileté (2) ;
iii) au moins le deuxième élément (16) fait d'un matériau élastomère étant logé à l'intérieur de ladite longueur (17) du trou (7) qui est sans ailettes (10) situées sur la deuxième extrémité (12) du trou (7) ;
iv) au moins le deuxième élément (16) en matériau élastomère étant conçu, en utilisation, pour s'engager avec le goujon fileté (2) par un ajustement serré.

2. Dispositif de retenue selon la revendication 1, **caractérisé en ce qu'**au moins le deuxième élément en élastomère (16) fait saillie radialement à partir de la paroi latérale (11) du trou (7) et vers l'axe de symétrie (A) dans une mesure égale ou supérieure à la mesure dans laquelle lesdites ailettes élastiquement déformables (10) font saillie radialement à partir de la paroi latérale (11) du trou (7).

3. Dispositif de retenue selon la revendication 1 ou 2, **caractérisé en ce qu'**au moins le deuxième élément en élastomère (16) s'étend axialement à l'intérieur de ladite deuxième extrémité (9, 12) du trou en une quantité inférieure à l'extension axiale d'une longueur intermédiaire (18) de la paroi latérale (11) du trou (7) fourni avec lesdites ailettes élastiquement déformables (10) sur toute sa longueur axiale.

4. Dispositif de retenue selon l'une quelconque des revendications précédentes, **caractérisé en ce que** la première et la deuxième partie ou section (5, 6) du corps sont formées d'une seule pièce dans la même matière plastique synthétique, lesdites ailettes élastiquement déformables (10) étant formées d'une seule pièce avec la deuxième partie ou section (6).

5. Dispositif de retenue selon l'une quelconque des revendications précédentes, **caractérisé en ce que** le premier et le deuxième élément en élastomère (15, 16) sont co-moulés avec ladite deuxième partie ou section (6) du corps, de manière à être solidaires avec celle-ci.

6. Dispositif de retenue selon la revendication 5, **caractérisé en ce que** la première partie ou section (5) est conformée en pince, ouverte radialement et apte à s'encliqueter, doublée à l'intérieur avec un troisième élément (19) en matériau élastomère, de forme annulaire et découpé radialement ; le troisième élément annulaire en élastomère (19) étant formé intégralement d'une pièce avec le premier et le deuxième éléments en élastomère (15, 16) respectivement par l'intermédiaire d'entretoises de raccordement (20).

7. Dispositif de retenue selon l'une quelconque des revendications 1 à 4, **caractérisé en ce que** le premier et le deuxième élément en élastomère (15, 16) sont ajustés intégralement ou sont couplés intégralement, par exemple par encliquetage, à la deuxième partie ou section (6) du corps sur la première et la deuxième extrémité (9, 12) du trou.

8. Dispositif de retenue selon l'une quelconque des revendications précédentes, **caractérisé en ce que** le premier et le deuxième éléments en élastomère (15, 16) sont réalisés en un matériau plus tendre qu'une matière plastique synthétique dont lesdites ailettes élastiquement déformables (10) sont faites.

9. Dispositif de retenue (23) pour la fixation d'une pièce fonctionnelle d'un véhicule à une carrosserie de véhicule (3), **caractérisé en ce qu'**il comprend au moins goujon fileté (2) fixé intégralement à la carrosserie et **en ce qu'**il s'étend axialement à partir de la carrosserie, et au moins un dispositif de retenue (1) selon l'une quelconque des revendications précédentes ; dans lequel lesdites ailettes élastiquement déformables (10) agissent ensemble pour former un ajustement par encliquetage, avec un mécanisme à cliquet, avec des nervures respectives d'un filetage (14) sur la paroi latérale (13) du goujon fileté (2) ; tandis qu'au moins un desdits premier et deuxième éléments en élastomère (15, 16) agit ensemble pour former un ajustement serré avec le goujon fileté (2), de manière à être comprimé élastiquement radialement par le filetage (14) sur la paroi latérale (13) du goujon fileté (2).

10. Système de retenue (23) selon la revendication 9, **caractérisé en ce que** les premier et deuxième éléments en élastomère (15, 16) sont faits dans un matériau plus tendre qu'une matière plastique synthétique dont lesdites ailettes élastiquement déformables (10) sont faites.
